# EUROPÄISCHE PATENTSCHRIFT

(11) **EP 4 036 913 B1**
(45) Veröffentlichungstag und Bekanntmachung des Hinweises auf die Patenterteilung: **20.08.2025**
(21) Anmeldenummer: 21154021.6
(22) Anmeldetag: 28.01.2021
(51) Int. Cl.: G10L 15/22, G06F 40/20

(54) **ERZEUGUNG EINES VERTEILUNGSALGORITHMUS FÜR EINEN VIRTUELLEN SPRACHASSISTENTEN**
GENERATION OF A DISTRIBUTION ALGORITHM FOR A VIRTUAL SPEECH ASSISTANT
GÉNÉRATION D'UN ALGORITHME DE RÉPARTITION POUR UN ASSISTANT LINGUISTIQUE VIRTUEL

(43) Veröffentlichungstag der Anmeldung: 03.08.2022
(73) Patentinhaber: Deutsche Telekom AG, 53113 Bonn (DE)
(72) Erfinder: Minow, Jascha, 64625 Bensheim (DE); Jahn, Carl, 65191 Wiesbaden (DE); Platschek, Martin Michael, 13347 Berlin (DE); El Mallouki, Said, 56329 St. Goar (DE)
(74) Vertreter: Braun-Dullaeus Pannen Emmerling Patent- & Rechtsanwaltspartnerschaft mbB

(56) Entgegenhaltungen:
- R. DE MORI ET AL: "Spoken language understanding", IEEE SIGNAL PROCES SING MAGAZINE, vol. 25, no. 3, 1 May 2008 (2008-05-01), US, pages 50 - 58, XP055531857, ISSN: 1053-5888, DOI: 10.1109/MSP.2008.918413
- DILEK HAKKANI-T?R ET AL: "Multi-Domain Joint Semantic Frame Parsing Using Bi-Directional RNN-LSTM", INTERSPEECH 2016, vol. 2016, 8 September 2016 (2016-09-08), pages 715 - 719, XP055406473, ISSN: 1990-9772, DOI: 10.21437/Interspeech.2016-402
- UYSAL ALPER KURSAT ET AL: "The impact of preprocessing on text classification", INFORMATION PROCESSING & MANAGEMENT, ELSEVIER, BARKING, GB, vol. 50, no. 1, 16 September 2013 (2013-09-16), pages 104 - 112, XP028758193, ISSN: 0306-4573, DOI: 10.1016/J.IPM.2013.08.006
- OSVALDO SIMEONE: "A Brief Introduction to Machine Learning for Engineers", ARXIV.ORG, CORNELL UNIVERSITY LIBRARY, 201 OLIN LIBRARY CORNELL UNIVERSITY ITHACA, NY 14853, 8 September 2017 (2017-09-08), XP081312909
- PIETER GIJSBERS ET AL: "Layered TPOT: Speeding up Tree-based Pipeline Optimization", ARXIV.ORG, CORNELL UNIVERSITY LIBRARY, 201 OLIN LIBRARY CORNELL UNIVERSITY ITHACA, NY 14853, 18 January 2018 (2018-01-18), XP081222542

## Beschreibung

Die vorliegende Erfindung betrifft das technische Gebiet von virtuellen Sprachassistenten und insbesondere ein Verfahren zur Erzeugung eines Verteilungsalgorithmus für einen virtuellen Sprachassistenten, eine Rechnereinheit, die zur Erzeugung des virtuellen Sprachassistenten eingerichtet ist, eine Verwendung des virtuellen Sprachassistenten sowie ein zu Erzeugung des Verteilungsalgorithmus programmiertes Computerprogramm.

Aus dem Stand der Technik sind Verteilungsalgorithmen für eingegangene Audiosignale eines virtuellen Sprachassistenten bekannt. Solche Verteilungsalgorithmen werden auch als "Dispatcher Modelle" bezeichnet und dienen dazu Sprachbefehle eines Nutzers der richtigen Domain respektive dem geeigneten spezifischen Modell zur Analyse und Durchführung der Anfrage zuzuführen. Konkret bedeutet dies: der Nutzer übergibt mittels seines Endgeräts ein Sprachbefehl oder eine Anfrage als Audiosignal an den virtuellen Assistenten. Das Nutzerendgerät kann dieses Audiosignal beispielsweise mit seinem Mikrofon aufzeichnen. Heutige virtuelle Sprachassistenten besitzen mittlerweile einen recht großen Umfang verschiedene Domänen, bzw. spezifischer Modelle bezüglich der Nutzeranfragen. Anstatt Domäne wird an vielen Stellen auch der englischsprachige Begriff Domains verwendet, da diese dem Fachmann, insbesondere auf dem deutschen Fachmann, also feststehender technischer Begriff bekannt ist. So können virtuelle Assistenten Anrufe tätigen, Nachrichten senden, Informationen aus dem Internet finden, Routen berechnen, Musik abspielen, Geräte finden und vieles mehr, wobei innerhalb jeder dieser Domain noch zahlreiche Untergruppen an Befehlen oder Anfragen existieren.

DILEK HAKKANI-TÜR ET AL: "Multi-Domain Joint Semantic Frame Parsing Using Bi-Directional RNN-LSTM", INTERSPEECH 2016, Bd. 2016, 8. September 2016 (2016-09-08), Seiten 715-719, XP055406473, ISSN: 1990-9772, DOI: 10.21437/Interspeech.2016-402 beschreibt einen ganzheitlichen Multi-Domain- und Multi-Task-Ansatz (d.h. Slot-Filling, Domain- und Intent-Detection) zur Schätzung vollständiger semantischer Frames für alle Nutzeräußerungen, die an ein Konversationssystem gerichtet sind. Dabei wird die besondere Leistungsfähigkeit von Deep-Learning-Methoden demonstriert, nämlich bi-direktionale rekurrente neuronale Netze (RNN) mit LSTM-Zellen (RNN-LSTM) zur Bewältigung dieser Komplexität Komplexität zu bewältigen.

PIETER GIJSBERS ET AL: "Layered TPOT: Speeding up Tree-based Pipeline Optimization" offenbart eine AuoML Pipeline die verschiedene Pipelines auf unterschiedlichen Samples trainiert. Die Pipeline evaluiert Algorithmen zuerst auf Subsets des gesamten Datensatzes, bevor die besten Algorithmen auf dem gesamten Datensatz angewandt werden.

Ein Verteilungsalgorithmus, also das "Dispatcher Modell", hat nun die Aufgabe das in Text umgewandelte empfangene Audiosignal möglichst schnell zu dem hierfür vorgesehenen spezifischen Modell zur Analyse und Durchführung der Anfrage zu übergeben. Das Audiosignal wird mittels Speech-to-Text Algorithmen zu Text umgewandelt.

Herkömmlicherweise wird ein solcher Verteilungsalgorithmus erzeugt mittels Aufnahme aller Sätze aus den verschiedenen spezifischen Modellen ohne Berücksichtigung der darin enthaltenen Entitäten. Eine Nachbearbeitung des Models erfolgt manuell durch Autoren mit dem Ziel die Effizienz des Models zu verbessern und Inkonsistenzen zu bereinigen.

Da die Anzahl der spezifischen Modelle immer weiter wächst und immer komplexer wird, wächst auch die Komplexität des Verteilungsalgorithmus, sodass dieser zunehmend aufwendiger zu administrieren ist und zunehmend schlechtere Performance im Hinblick auf die Geschwindigkeit der Verteilung des Eingangssignals auf die verschiedenen Domänen aufweist. Die Verteilungsalgorithmen werden als mit der Zeit immer größer und in effizienter, wobei zu befürchten ist, dass diese Problematik in den nächsten Jahren noch deutlich ansteigt. Auch das Training und die Ausführung von Anfragen durch Details Algorithmus dauernd mit wachsendem Umfang länger, sodass Laufzeiten negativ beeinflusst werden. Ein weiteres Problem ist die wachsende Anzahl von Sätzen, die aufgrund ihrer Ähnlichkeit nur sehr schwer verschiedenen Domänen zugeordnet werden können, da die Abweichung der Sätze sehr minimal sind. Beispielsweise könnte der Satz "schalte RTL ein" eine Radio-Domain, eine TV-Domain betreffen oder einer Smartphone-Domain betreffen.

Der vorliegenden Erfindung liegt daher die Aufgabe zu Grunde, Techniken zur Erzeugung eines effizienten Verteilungsalgorithmus anzugeben und somit die eingangs genannten Nachteile zumindest zum Teil zu beseitigen. Die vorliegende Erfindung löst diese Aufgabe durch die unabhängigen Ansprüche.

Im Folgenden werden bevorzugte Ausführungsbeispiele der vorliegenden Erfindung unter Bezugnahme auf die begleitenden Figuren erläutert:
- Fig. 1:: zeigt ein Flussdiagramm des erfindungsgemäßen Verfahrens.
- Fig. 2:: zeigt eine technische Umgebung, die geeignet ist, um das erfindungsgemäße Verfahren aus Fig. 1 durchzuführen.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

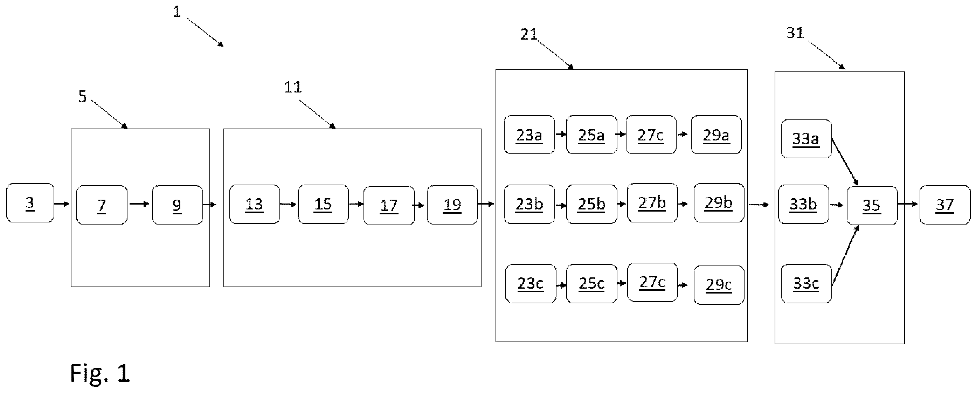

Fig. 1 zeigt ein Flussdiagramm des erfindungsgemäßen Verfahrens zur Erstellung des Verteilungsalgorithmus 1.

In einem ersten Schritt 3 werden Änderungen in den spezifischen Modellen, respektive in den Domänen, erkannt, die einem virtuellen Sprachassistenten zu Grunde liegen.

Als nächster Schritt des Verfahrens wird der Verarbeitungsblock 5 ausgeführt, der das erzeugen der Eingangsdaten aus den spezifischen Modellen realisiert. Dies bedeutet, dass wenn "Ground-Truth"-Änderungen erkannt werden, die Änderungen für die spezifischen Modelle zufolge haben der Prozess des Verarbeitungsblock 5 ausgelöst wird. Hierzu werden innerhalb des Verarbeitungsblock fünf die Schritte 7 und 9 ausgeführt. In Schritt 7 werden alle Audioelemente, auch als "Utterances" bezeichnet, aus den spezifischen Modellen extrahiert und den Eingangsdaten hinzugefügt. In Schritt 9 erfolgt eine Erkennung im Hinblick auf die verschiedenen Domänen und eine entsprechende Gruppierung der Audioelemente. Somit liegen nun die Eingangsdaten vor.

Als nächstes folgt der Verarbeitungsblock 11, wobei innerhalb des Verarbeitungsblock 11 die Schritte 13, 15, 17, 19, insbesondere nacheinander, ausgeführt werden. Der Verarbeitungsblock 11 optimiert die Eingangsdaten, die an ihn von dem Verarbeitungsblock 5 übergeben werden. Die Eingangsdaten werden bereinigt, indem in Schritt 13 Dubletten entfernt werden, in Schritt 15 fehlerhafte Daten korrigiert werden, in Schritt 17 Füllwörter, wie etwa der, die, das, bitte, danke, und etc., entfernt werden, die für das Training des Verteilungsalgorithmus keinen Einfluss haben. In Schritt 19 werden zudem Überschneidungen und Ähnlichkeiten innerhalb der jeweiligen Domains identifiziert und entfernt, sodass am Ende des Optimierungsvorgangs insbesondere ein Minimalsatz von Phrasen pro Domain übrig bleibt. Dies hat den Grund, dass die heutigen Modelle für eine gute Laufzeitperformance häufig zu groß sind und sich die Phrasen häufig zu wenig unterscheiden. Durch die Optimierung wird also auch eine Überanpassung der Daten, ein sogenanntes Overfitting, vermieden.

Die optimierten Eingangsdaten werden in einem nächsten Schritt an dem Verarbeitungsblock 21 übergeben, in dem der Verteilungsalgorithmus erstellt wird, respektive in dem zunächst verschiedene Modelle des Verteilungsalgorithmus erstellt werden. Hierzu werden auf die optimierten Eingangsdaten verschiedene Methoden 23a, b, c angewendet, die verschiedene Teilmengen erzeugen. Dieser Prozess wird auch als Subsampling bezeichnet. Hierdurch wird auch die Anzahl der Phrasen weiter reduziert. In Schritt 23a wird die Methode "Zufalls-Subsampling" angewendet, die mittels eines implementierten Zufallsalgorithmus Phrasen, respektive Audioelemente, entfernt. **In** Schritt 23b wird die Methode "Häufigkeits-Subsampling" angewendet, die solche Phrasen, respektive Audioelemente, entfernt, die wenig verwendet werden, deren Häufigkeit also unter einem zu bestimmenden Schwellenwert liegt. **In** Schritt 23c wird die Methode "Ähnlichkeits-Subsampling" angewendet, die bei Phrasen, respektive Audioelemente, die sich ähnlich sind, zumindest Teilmengen der ähnlichen Phrasen, respektive der Audioelemente, entfernt. Als Ergebnis folgen hieraus Audioelemente mit einer höheren Wahrscheinlichkeit für ihre jeweilige Verwendung.

In den Schritten 23a, b, c werden also jeweils verschiedene Teilmengen erzeugt, die jeweils als Basis für die weiteren Schritte des Verarbeitungsblocks 21 dienen.

In den Schritten 25a, b, c werden mit den verbliebenen Teilmengen, respektive den verbliebenen "Utterances", die Domain-Modelle des Verteilungsalgorithmus erzeugt. Erzeugung eines NLU Models. Alle Utterances, welche nach der Filterung noch übrigbleiben werden in ein NLU Model gepackt. Wichtig ist, dass hierbei nur die Intents eine Rolle spielen.

In den Schritten 27a, b, c werden die jeweiligen "globalen" Verteilungsalgorithmen, basierend auf den jeweiligen Domain-Modellen des Verteilungsalgorithmus aus den Schritten 25a, b, c erzeugt. Dies basiert auf Domaindispatchern bei einer Dialogabwicklung, sowie einem globalen Dispatcher, der in die jeweiligen Domains verzweigt. Erzeugung "Refined Modelle": Weitere Filterung der Utterances unter Bezug der Entities und Entities-Values. Diese Modelle sind für die jeweiligen Use-Cases optimiert.

In den Schritten 27a, b, c werden die jeweiligen "globalen" Verteilungsalgorithmen in einer separaten Testumgebung basierend auf "Ground-Truth" Testdatensätzen automatisiert überprüft und validiert.

In dem Verarbeitungsblock 31 werden die verschiedenen globalen Verteilungsalgorithmen in den Schritten 33 a, b, c automatisch mittels generierter Testfälle überprüft, wobei jeweils ein Qualitätswert ermittelt wird, der das Testergebnis charakterisiert. In Schritt 35 wird anhand des Qualitätswerts eine, insbesondere das Beste, der verschiedenen Versionen des globalen Verteilungsalgorithmus ausgewählt.

In Schritt 37 wird das ausgewählte Modell des Verteilungsalgorithmus in den virtuellen Sprachassistenten implementiert.

Der virtuelle Sprachassistenten kann nun also durch das implementierte Modell des Verteilungsalgorithmus effizient und mit guter Performance die Anfragen des Nutzers auf seinem Endgerät bearbeiten.

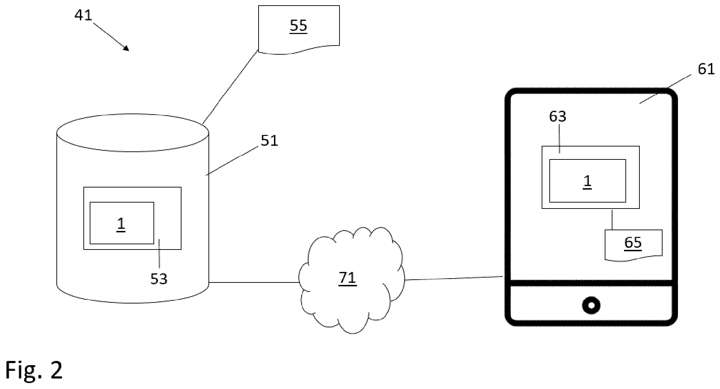

Fig. 2 zeigt eine technische Umgebung 41 die geeignet ist, das erfindungsgemäße Verfahren zur Erzeugung des Verteilungsalgorithmus und auch zur Anwendung des Verteilungsalgorithmus im Zusammenhang mit einem virtuellen Sprachassistenten auszuführen.

Die technische Umgebung 41 umfasst einen zentralen Server 51 sowie ein Endgerät 61 eines Nutzers, die über ein Kommunikationsnetzwerk 71, insbesondere das Internet und oder ein Mobilfunknetzwerk, miteinander verbunden sind. Der zentrale Server weist eine Rechnereinheit 53 auf der das erfindungsgemäße Verfahren zur Erzeugung des Verteilungsalgorithmus 1 implementiert ist.

Die Eingangsdaten können dem zentralen Server 51 über eine zentrale Datenbank 55 bereitgestellt werden, wodurch auf besonders einfache Art ermöglicht wird, dass das Verfahren zur Erzeugung des Verteilungsalgorithmus 1 automatisiert ablaufen kann, wenn eine Änderung der spezifischen Modelle, respektive der Domains, erkannt wird. Hierzu kann insbesondere ein Algorithmus auf dem zentralen Server 51 implementiert sein, der eingerichtet ist, eine solche Änderung automatisiert zu erkennen.

Der auf dem zentralen Server 51 erzeugte Verteilungsalgorithmus 1 kann im Zusammenhang mit einem virtuellen Sprachassistenten implementiert werden, der ebenfalls auf der Rechnereinheit 53 implementiert sein kann. Der virtuelle Sprachassistenten kann aber auch zusätzlich oder alternativ auf der Rechnereinheit 63 des Endgeräts 61 implementiert sein.

Zu diesem Zweck kann der erzeugte Verteilungsalgorithmus 1 über das Kommunikationsnetzwerk 71 an das Endgerät 61 übertragen. Mögliche Ausgestaltungen des Endgeräts 61 sind ein Smartphone, ein Tablet, eine Smartwatch, ein intelligenter Lautsprecher und/oder ein Computer.

Es besteht allerdings auch die Möglichkeit, dass der Verteilungsalgorithmus direkt auf dem Endgerät 61 erzeugt wird. Dies kann den Vorteil bieten, dass individuelle Eigenschaften des Nutzers besser berücksichtigt werden können. In diesem Fall kann zur Erstellung auf die interne Datenbank 65 aber auch zusätzlich auf die externe zentrale Datenbank 55 zugegriffen werden, um die Eingangsdaten zu generieren. Nachdem der Verteilungsalgorithmus auf dem Endgerät 61 erzeugt wurde, wird er in den virtuellen Sprachassistenten implementiert und dadurch umgesetzt.

## Patentansprüche

1. Verfahren zum Erzeugen eines Verteilungsalgorithmus eines virtuellen Sprachassistenten mittels einer Rechnereinheit (53, 63), wobei der Verteilungsalgorithmus eingerichtet ist eine Anfrage als Audiosignal eines Nutzers an ein spezifisches Auswertungsmodul zur Verarbeitung der Anfrage weiterzuleiten, wobei die Erzeugung des Verteilungsalgorithmus die folgenden Schritte umfasst:
• Erzeugung (5) eines Eingangsdatensatz, wobei der Eingangsdatensatz Elemente, insbesondere Elemente der spezifischen Auswertungsmodule umfasst;
• Optimierung (11) des Eingangsdatensatzes im Hinblick auf eine Generierung eines reduzierten Eingangsdatensatzes, wobei die Optimierung folgende Maßnahmen umfasst: Entfernung von redundanten Daten, Entfernung Füllwörtern und/oder Entfernung von Überschneidungen und ähnlichen Sätzen;
• Anwenden von zumindest zwei verschiedenen Methoden (23) auf den generierten reduzierten Datensatz zur Erzeugung von zumindest zwei verschiedenen Teilmengen, insbesondere einer ersten Teilmenge und einer zweiten Teilmenge, aus dem reduzierten Datensatz;
• Erzeugung von zumindest zwei verschiedenen Verteilungsalgorithmus-Modellen (25, 27), wobei jedes der beiden Verteilungsalgorithmus-Modelle basierend auf einer der Teilmengen erzeugt wird, insbesondere wird ein erstes Verteilungsalgorithmus-Modell basierend auf der ersten Teilmenge und ein zweites Verteilungsalgorithmus-Modell basierend auf der zweiten Teilmenge des reduzierten Datensatzes erzeugt;
• Testen (31) der Qualität der zumindest zwei verschiedenen Verteilungsalgorithmus-Modellen anhand von Referenzdaten, wobei jedem der Verteilungsalgorithmus-Modelle als Testergebnis ein Qualitätswert zugeordnet wird;
• Auswahl (35) des Verteilungsalgorithmus-Modells mit dem besten Qualitätswert als den Verteilungsalgorithmus.

2. Verfahren nach Anspruch 1, wobei der Verteilungsalgorithmus automatisiert mittels der Rechnereinheit (53, 63) erzeugt wird.

3. Verfahren nach einem der vorhergehenden Ansprüche, wobei die Elemente, insbesondere die Audioelemente, vor der Optimierung in verschiedene Domains gruppiert werden.

4. Verfahren nach einem der vorhergehenden Ansprüche, wobei der Verteilungsalgorithmus in regelmäßigen Zeitintervallen neu generiert wird.

5. Verfahren nach einem der vorhergehenden Ansprüche, wobei der Verteilungsalgorithmus neu generiert wird, wenn neue spezifische Auswertungsmodule in den virtuellen Sprachassistenten implementiert werden, wenn vorhandene Auswertungsmodule des virtuellen Sprachassistenten verändert werden und/oder wenn eine Änderung der Ground-Truth-Daten festgestellt wird.

6. Verfahren nach einem der vorhergehenden Ansprüche, wobei die Optimierung bis zu einem vorgegebenen Abbruchkriterium durchgeführt wird.

7. Verfahren nach Anspruch 6, wobei das Abbruchkriterium entweder die Erzeugung eines minimalen Datensatzes oder eines optimalen Kompromisses aus Größe des Datensatzes und Informationsgehalt des Datensatzes ist.

8. Verfahren nach einem der vorhergehenden Ansprüche, wobei die Erzeugung der verschiedenen Teilmengen folgende Methode umfasst: zufälliges Subsampling, Häufigkeits-Subsampling und/oder Ähnlichkeitsanalyse-Subsampling.

9. Verfahren nach einem der vorhergehenden Ansprüche, wobei die Rechnereinheit (53, 63) auf einem zentralen Server (51) oder auf einem Endgerät (63) des Nutzers implementiert ist.

10. Verfahren nach einem der vorhergehenden Ansprüche, wobei die Rechnereinheit Zugriff auf eine lokale und/oder eine zentrale Datenbank (55, 65) hat, wobei die Datenbank die Eingangsdaten bereitstellt.

11. Verfahren nach einem der vorhergehenden Ansprüche, wobei das ausgewählte Verteilungsalgorithmus-Modell über ein Kommunikationsnetzwerk (71) an Endgeräte der Nutzer übermittelt wird.

12. Verwendung eines Verteilungsalgorithmus nach einem der Ansprüche 1-11 mit einem virtuellen Sprachassistenten auf einem Nutzerendgerät.

13. Recheneinheit auf einem Server oder einem Nutzerendgerät, wobei die Rechnereinheit Mittel aufweist, die zur Durchführung eines der Verfahren 1-11 eingerichtet sind und/oder den Verteilungsalgorithmus im Zusammenhang mit einem virtuellen Sprachassistenten ausführen.

14. Computerprogramm, wobei das Computerprogramm auf einer Rechnereinheit implementiert ist und durch die Befehle des Computerprogramms die Schritte des Verfahrens 1-11 ausführt.

## Claims

1. A method for generating a distribution algorithm for a virtual language assistant by means of a computing unit (53, 63), wherein the distribution algorithm is configured to forward a query from a user as an audio signal to a specific evaluation module for processing the query, wherein the generation of the distribution algorithm comprises the following steps:
• Generating (5) an input dataset, wherein the input dataset comprises elements, in particular elements of the specific evaluation modules;
• Optimising (11) the input dataset for the purpose of a generation of a reduced input dataset, wherein the optimisation comprises the following steps: removing redundant data, removing filler words and/or removing overlaps and similar sentences;
• Applying at least two different methods (23) to the generated reduced dataset to generate at least two different subsets, in particular a first subset and a second subset, from the reduced data set;
• Generating at least two different distribution algorithm models (25, 27), wherein each of the two distribution algorithm models is generated based on one of the subsets, in particular a first distribution algorithm model is generated based on the first subset and a second distribution algorithm model is generated based on the second subset of the reduced dataset;
• Testing (31) the quality of the at least two different distribution algorithm models against reference data, wherein a quality value is assigned to each of the distribution algorithm models as a test result;
• Selecting (35) the distribution algorithm model with the best quality value as the distribution algorithm.

2. The method according to Claim 1, wherein the distribution algorithm is generated automatically by means of the computing unit (53, 63).

3. The method according to one of the preceding claims, wherein the elements, in particular the audio elements, are grouped into different domains before the optimisation.

4. The method according to any one of the preceding claims, wherein the distribution algorithm is regenerated at regular time intervals.

5. The method according to any one of the preceding claims, wherein the distribution algorithm is regenerated when new specific evaluation modules are implemented in the virtual speech assistant, when existing evaluation modules of the virtual speech assistant are changed, and/or when a change in the ground truth data is detected.

6. The method according to any one of the preceding claims, wherein the optimisation is carried out up to a predetermined termination criterion.

7. The method according to Claim 6, wherein the termination criterion is either the generation of a minimum dataset or of an optimal compromise between the size of the dataset and the information content of the dataset.

8. The method according to any one of the preceding claims, wherein the generation of the various subsets comprises the following method: random subsampling, frequency subsampling, and/or similarity analysis subsampling.

9. The method according to any one of the preceding claims, wherein the computing unit (53, 63) is implemented on a central server (51) or on an end device (63) of the user.

10. The method according to any one of the preceding claims, wherein the computing unit has access to a local and/or a central database (55, 65), wherein the database provides the input data.

11. The method according to any one of the preceding claims, wherein the selected distribution algorithm model is transmitted to end devices of the users via a communication network (71).

12. Use of a distribution algorithm according to any one of Claims 1-11 with a virtual speech assistant on a user end device.

13. A computing unit on a server or on a user end device, wherein the computing unit includes means that are configured to carry out one of the methods 1-11 and/or to run the distribution algorithm in association with a virtual speech assistant.

14. A computer program, wherein the computer program is implemented on a computer unit and executes the steps of the method 1-11 by the commands of the computing program.

## Revendications

1. Procédé de génération d'un algorithme de répartition pour un assistant vocal virtuel au moyen d'une unité informatique (53, 63), dans lequel l'algorithme de répartition est configuré pour transmettre une requête sous forme de signal audio d'un utilisateur à un module d'évaluation spécifique pour le traitement de la requête, dans lequel la génération de l'algorithme comprend les étapes suivantes :
• génération (5) d'un ensemble de données d'entrée, dans lequel l'ensemble de données d'entrée comprend des éléments, notamment des éléments des modules d'évaluation spécifiques ;
• optimisation (11) de l'ensemble de données d'entrée en vue de générer un ensemble de données d'entrée réduit, dans lequel l'optimisation comprend les mesures suivantes : suppression des données redondantes, suppression des mots de remplissage et/ou suppression des chevauchements et des phrases similaires ;
• application d'au moins deux méthodes différentes (23) à l'ensemble de données réduit généré pour générer au moins deux sous-ensembles différents, notamment un premier sous-ensemble et un deuxième sous-ensemble, à partir de l'ensemble de données réduit ;
• génération d'au moins deux modèles d'algorithmes de répartition différents (25, 27), dans lequel chacun des deux modèles d'algorithme de répartition est généré sur la base d'un des sous-ensembles, notamment un premier modèle d'algorithme de répartition est notamment généré sur la base du premier sous-ensemble et un deuxième modèle d'algorithme de répartition est généré sur la base du deuxième sous-ensemble de l'ensemble de données réduit ;
• test (31) de la qualité des au moins deux modèles d'algorithmes de répartition différents à l'aide de données de référence, dans lequel chacun des modèles d'algorithme de répartition se voit attribuer une valeur de qualité comme résultat de test ;
• sélection (35) du modèle d'algorithme de répartition présentant la meilleure valeur de qualité comme algorithme de répartition.

2. Procédé selon la revendication 1, dans lequel l'algorithme de répartition est généré automatiquement au moyen de l'unité informatique (53, 63).

3. Procédé selon une des revendications précédentes, dans lequel les éléments, notamment les éléments audio, sont regroupés en différents domaines avant l'optimisation.

4. Procédé selon une des revendications précédentes, dans lequel l'algorithme de répartition est régénéré à intervalles réguliers.

5. Procédé selon une des revendications précédentes, dans lequel l'algorithme de répartition est régénéré, lorsque de nouveaux modules d'évaluation spécifiques sont implémentés dans l'assistant vocal virtuel, lorsque des modules d'évaluation existants de l'assistant vocal virtuel sont modifiés et/ou lorsqu'une modification des données de vérité de terrain est détectée.

6. Procédé selon une des revendications précédentes, dans lequel l'optimisation est effectuée jusqu'à un critère d'arrêt prédéterminé.

7. Procédé selon la revendication 6, dans lequel le critère d'arrêt est soit la génération d'un ensemble de données minimal, soit un compromis optimal entre la taille de l'ensemble de données et le contenu informatif de l'ensemble de données.

8. Procédé selon une quelconque des revendications précédentes, dans lequel la génération des différents sous-ensembles comprend les méthodes suivantes : sous-échantillonnage aléatoire, sous-échantillonnage fréquentiel et/ou sous-échantillonnage par analyse de similarité.

9. Procédé selon une des revendications précédentes, dans lequel l'unité informatique (53, 63) est implémentée sur un serveur central (51) ou sur un terminal d'utilisateur (63).

10. Procédé selon une des revendications précédentes, dans lequel l'unité informatique a accès à une base de données locale et/ou centrale (55, 65), dans lequel la base de données fournit les données d'entrée.

11. Procédé selon une des revendications précédentes, dans lequel le modèle d'algorithme de répartition sélectionné est transmis aux terminaux d'utilisateurs via un réseau de communication (71).

12. Utilisation d'un algorithme de répartition selon une des revendications 1 à 11 avec un assistant vocal virtuel sur un terminal d'utilisateur.

13. Unité informatique sur un serveur ou un terminal d'utilisateur, dans laquelle l'unité informatique est équipée de moyens configurés pour mettre en œuvre un des procédés 1 à 11 et/ou exécuter l'algorithme de répartition en liaison avec un assistant vocal virtuel.

14. Programme informatique, dans lequel le programme informatique est implémenté sur une unité informatique et exécute les étapes du procédé 1 à 11 grâce aux instructions du programme informatique.
